# EUROPÄISCHE PATENTSCHRIFT

(11) **EP 3 251 200 B1**
(45) Veröffentlichungstag und Bekanntmachung des Hinweises auf die Patenterteilung: **18.12.2019**
(21) Anmeldenummer: 15823340.3
(22) Anmeldetag: 29.12.2015
(51) Int. Cl.: B60T 8/36, F04B 17/03, H02K 7/14, B60T 13/20, B60T 17/22, F04C 2/08, F04C 14/08, F04C 15/00, H02K 7/102, H02K 11/30, H02K 11/215, H02K 11/24, F04B 49/06, H02K 11/33

(54) **MOTOR-PUMPEN-AGGREGAT FÜR EIN BREMSSYSTEM**
MOTOR/PUMP ASSEMBLY FOR A BRAKE SYSTEM
GROUPE MOTOPOMPE POUR SYSTÈME DE FREINAGE

(30) Priorität: 28.01.2015 DE 102015201411
(43) Veröffentlichungstag der Anmeldung: 06.12.2017
(73) Patentinhaber: Robert Bosch GmbH, 70442 Stuttgart (DE)
(72) Erfinder: FOERCH, Dirk, 74196 Neuenstadt/Stein (DE)
(86) Internationale Anmeldenummer: PCT/EP2015/081321
(87) Internationale Veröffentlichungsnummer: WO 2016/119987

(56) Entgegenhaltungen:
- WO-A1-02/060734
- WO-A1-02/060734
- CN-B- 102 645 547
- DE-A1-102005 040 647
- DE-A1-102011 017 011
- DE-A1-102011 079 657
- DE-A1-102011 079 657
- DE-T2- 60 123 581
- JP-A- H0 755 415
- JP-A- 2000 065 596
- JP-A- 2002 176 757
- JP-A- 2003 070 203
- JP-A- 2007 028 811
- JP-A- 2007 028 811
- US-A1- 2001 043 864
- US-A1- 2011 181 221
- US-A1- 2013 099 609
- US-A1- 2014 260 233
- US-A1- 2014 265 169
- US-A1- 2014 294 625
- US-A1- 2014 294 625

## Beschreibung

Die Erfindung geht aus von einem Motor-Pumpen-Aggregat für ein Bremssystem nach der Gattung des unabhängigen Patentanspruchs 1.

Bei bekannten Bremssystemen mit ESP- und/oder ABS-Funktionalität (ESP: Elektronisches Stabilitätsprogramm, ABS: Antiblockiersystem) wird in der Regel ein Gleichstrommotor eingesetzt, um über einen Exzenter zwei hydraulische Pumpen zur Förderung von Bremsflüssigkeit zu betreiben. In der Regel handelt es sich hierbei um drehzahlgeregelte oder vollangesteuerte Gleichstrommotoren. Die Drehzahlerfassung erfolgt dabei anhand der vom Motor selbst induzierten generatorischen Spannung in der nicht bestromten Phase der Ansteuerung.

Aus der DE 197 33 147 C1 ist beispielsweise ein Motor-Pumpen-Aggregat für ein Kraftfahrzeugbremssystem mit einer ABS-Funktionalität bekannt. Das Motor-Pumpen-Aggregat umfasst einen Elektromotor, welcher eine Motorwelle umfasst, deren freies Ende als Exzenter-Abtriebswelle ausgeführt ist, welche zwei radial gegenüberliegende Pumpenstößel antreibt, welche in einem Pumpengehäuse angeordnet sind.

Aus der US 2014/0294625 A1 ist ein Motor-Pumpen-Aggregat mit einem Elektromotor bekannt, welcher eine Motorwelle aufweist, welche mindestens eine in einem Pumpengehäuse angeordnete Fluidpumpe antreibt. Ein Steuergerät ist am Pumpengehäuse angeordnet und stellt eine aktuelle Drehzahl und/oder ein aktuelles Drehmoment des Elektromotors ein. Das Steuergerät erfasst über eine Sensoranordnung, welche einen Messwertgeber und einen magnetischen Messwertaufnehmer umfasst, einen aktuellen Drehwinkel der Motorwelle berührungslos und wertet diesen zur Ansteuerung des Elektromotors aus. Der Messwertgeber ist an einem freien Ende der Motorwelle innerhalb des Pumpengehäuses angeordnet und beeinflusst in Abhängigkeit von der Drehbewegung der Motorwelle mindestens eine magnetische Größe eines von dem magnetischen Messwertaufnehmer erfassten Magnetfelds, welcher ortsfest im Steuergerät angeordnet ist.

Aus der WO 02/060734 A1 ist ein Motor-Pumpen-Aggregat für ein Bremssystem bekannt, welches einen Elektromotor umfasst, welcher eine Motorwelle aufweist, welche mindestens eine in einem Pumpengehäuse angeordnete Fluidpumpe antreibt. Ein Steuergerät ist am Pumpengehäuse angeordnet und stellt eine aktuelle Drehzahl und/oder ein aktuelles Drehmoment des Elektromotors ein. Das Steuergerät erfasst über eine Sensoranordnung, welche einen Messwertgeber und einen magnetischen Messwertaufnehmer umfasst, einen aktuellen Drehwinkel der Motorwelle berührungslos und wertet diesen zur Ansteuerung des Elektromotors aus. Der Messwertgeber ist an einem freien Ende der Motorwelle innerhalb des Pumpengehäuses angeordnet und beeinflusst in Abhängigkeit von der Drehbewegung der Motorwelle mindestens eine magnetische Größe eines von dem magnetischen Messwertaufnehmer erfassten Magnetfelds, welcher ortsfest im Steuergerät angeordnet ist.

### Offenbarung der Erfindung

Das erfindungsgemäße Motor-Pumpen-Aggregat für ein Bremssystem mit den Merkmalen des unabhängigen Patentanspruchs 1 hat demgegenüber den Vorteil, dass zusätzlich zur verfügbaren Drehzahlinformation die tatsächliche Position des Motorankers bzw. der Motorwelle erfasst werden kann, ohne dabei zusätzliche elektrische Leitungen zum Motor führen zu müssen. Diese Drehwinkelinformation kann insbesondere bei elektronisch kommutierten Gleichstrommotoren eingesetzt werden.

Ausführungsformen des erfindungsgemäßen Motor-Pumpen-Aggregats nutzen in vorteilhafter Weise den speziellen grundsätzlichen Aufbau des Motor-Pumpen-Aggregats aus, bei welchem der Elektromotor und das Steuergerät jeweils am Pumpengehäuse angeflanscht sind. Um teure zusätzliche Leitungen in den Innenraum des Elektromotors zu vermeiden, wird zur Erfassung von Drehwinkelinformationen lediglich eine kleinere Änderung an der Motorwelle und im Steuergerät vorgenommen. Die Information des Drehwinkels wird anhand von Magnetfeldlinien erfasst, welche sich mit der Position des Ankers bzw. der Motorwelle verändern. Diese Beeinflussung der Magnetfeldlinien wird vom Sensor erfasst, ausgewertet und in eine Drehwinkelinformation bzw. Drehzahlinformation umgerechnet. Die Umrechnung kann dabei von einer separaten Auswerte- und Steuereinheit oder von einer in den Messwertaufnehmer integrierten Einheit durchgeführt werden.

Ausführungsformen der vorliegenden Erfindung stellen ein Motor-Pumpen-Aggregat für ein Bremssystem mit einem Elektromotor zur Verfügung, welcher eine Motorwelle aufweist, welche mindestens eine Fluidpumpe antreibt, welche in einem Pumpengehäuse angeordnet ist. Hierbei ist ein Steuergerät am Pumpengehäuse angeordnet und stellt eine aktuelle Drehzahl und/oder ein aktuelles Drehmoment des Elektromotors ein. Hierbei erfasst das Steuergerät über eine Sensoranordnung, welche einen Messwertgeber und einen magnetischen Messwertaufnehmer umfasst, berührungslos einen aktuellen Drehwinkel der Motorwelle und wertet diesen zur Ansteuerung des Elektromotors aus. Der Messwertgeber ist an einem freien Ende der Motorwelle innerhalb des Pumpengehäuses angeordnet und beeinflusst in Abhängigkeit von der Drehbewegung der Motorwelle mindestens eine magnetische Größe eines von dem magnetischen Messwertaufnehmer erfassten Magnetfelds, welcher ortsfest im Steuergerät angeordnet ist.

Hierbei weist der magnetische Messwertaufnehmer einen Permanentmagneten auf, welcher das von dem magnetischen Messwertaufnehmer erfasste Magnetfeld erzeugt. Die Magnetisierungsachse des Permanentmagneten kann vorzugsweise parallel zur Achse der Motorwelle liegen. Zur Beeinflussung des Magnetfelds des Permanentmagneten ist der Messwertgeber als geometrische Form ausgeführt, welche durch die Drehbewegung der Motorwelle den "Luftspalt" zwischen dem Permanentmagneten und dem freien Ende der Motorwelle verändert, so dass sich die Feldstärke bzw. der magnetische Fluss zwischen dem Permanentmagneten und der Motorwelle ebenfalls verändert. Diese Änderung kann von dem magnetischen Messwertaufnehmer, d.h. von dem Messwertaufnehmer, welcher auf die Magnetfeldänderungen reagiert, erfasst werden. Die geometrische Form ist als exzentrisch am freien Ende der Motorwelle angeordneter Zapfen ausgeführt. Die als Zapfen ausgeführte geometrische Form erzeugt im Messwertaufnehmer ein Sinussignal, dessen Grundfrequenz der Drehzahl der Motorwelle entspricht.

Die Fluidpumpe kann beispielsweise als Kolbenpumpe oder als Zahnradpumpe ausgeführt werden.

Durch die in den abhängigen Ansprüchen aufgeführten Maßnahmen und Weiterbildungen sind vorteilhafte Verbesserungen des im unabhängigen Patentanspruch 1 angegebenen Motor-Pumpen-Aggregats für ein Bremssystem möglich.

In weiterer vorteilhafter Ausgestaltung des erfindungsgemäßen Motor-Pumpen-Aggregats kann der Messwertaufnehmer einen Hallsensor zur Erfassung der Magnetfeldänderungen aufweisen. Hallsensoren können in vorteilhafter Weise in großer Stückzahl kostengünstig beschafft bzw. hergestellt werden.

In weiterer vorteilhafter Ausgestaltung des erfindungsgemäßen Motor-Pumpen-Aggregats kann ein Gehäuse des Steuergeräts an das Pumpengehäuses angeflanscht werden.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines Ausführungsbeispiels eines erfindungsgemäßen Motor-Pumpen-Aggregats für ein Bremssystem.
Fig. 2 zeigt eine schematische perspektivische Darstellung des freien Endes einer aus dem Stand der Technik bekannten Motorwelle.
Fig. 3 zeigt eine Schnittdarstellung des freien Endes der Motorwelle aus Fig. 2 in einer ersten Stellung.
Fig.4 zeigt eine Schnittdarstellung des freien Endes der Motorwelle aus Fig. 2 in einer zweiten Stellung.
Fig. 5 zeigt eine schematische Schnittdarstellung eines aus dem Stand der Technik bekannten Motor-Pumpen-Aggregats für ein Bremssystem.

### Ausführungsformen der Erfindung

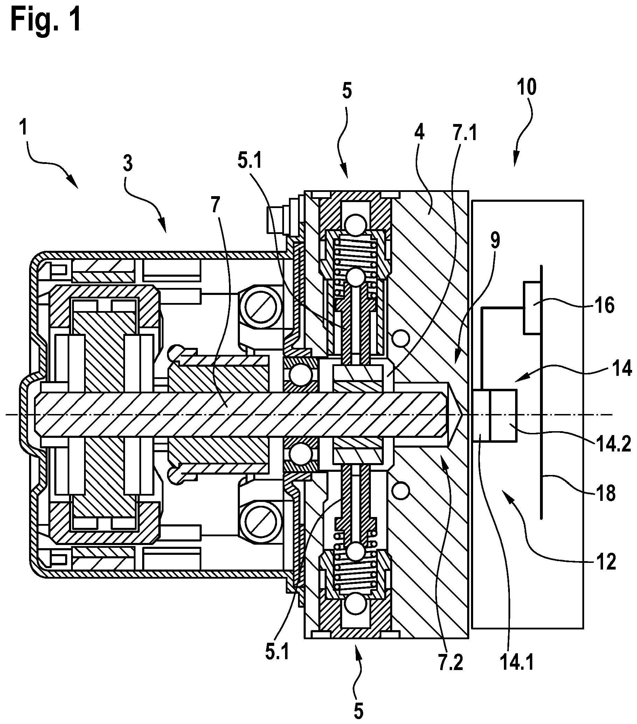

Wie aus Fig. 1 bis 5 ersichtlich ist, umfassen die dargestellten Ausführungsbeispiele eines Motor-Pumpen-Aggregats 1, 1A für ein Bremssystem jeweils einen Elektromotor 3, welcher eine Motorwelle 7, 7A aufweist, welche mindestens eine Fluidpumpe 5 antreibt. Die mindestens eine Fluidpumpe 5 ist in einem Pumpengehäuse 4 angeordnet. Hierbei ist ein Steuergerät 10, 10A am Pumpengehäuse 4 angeordnet und stellt eine aktuelle Drehzahl und/oder ein aktuelles Drehmoment des Elektromotors 3 ein. Hierbei erfasst das Steuergerät 10, 10A über eine Sensoranordnung 12, 12A, welche einen Messwertgeber 9, 9A und einen magnetischen Messwertaufnehmer 14, 14A umfasst, berührungslos einen aktuellen Drehwinkel der Motorwelle 7, 7A und wertet diesen zur Ansteuerung des Elektromotors 3 aus. Der Messwertgeber 9, 9A ist an einem freien Ende 7.2, 7.2A der Motorwelle 7, 7A innerhalb des Pumpengehäuses 4 angeordnet und beeinflusst in Abhängigkeit von der Drehbewegung der Motorwelle 7, 7A mindestens eine magnetische Größe eines von dem magnetischen Messwertaufnehmer 14, 14A erfassten Magnetfelds, welcher ortsfest im Steuergerät 10, 10A angeordnet ist. Somit wird die Information des Drehwinkels anhand von Magnetfeldlinien erfasst, welche sich mit der Position der Motorwelle 7, 7A bzw. des mit der Motorwelle 7, 7A verbundenen Ankers des Elektromotors 3 verändern.

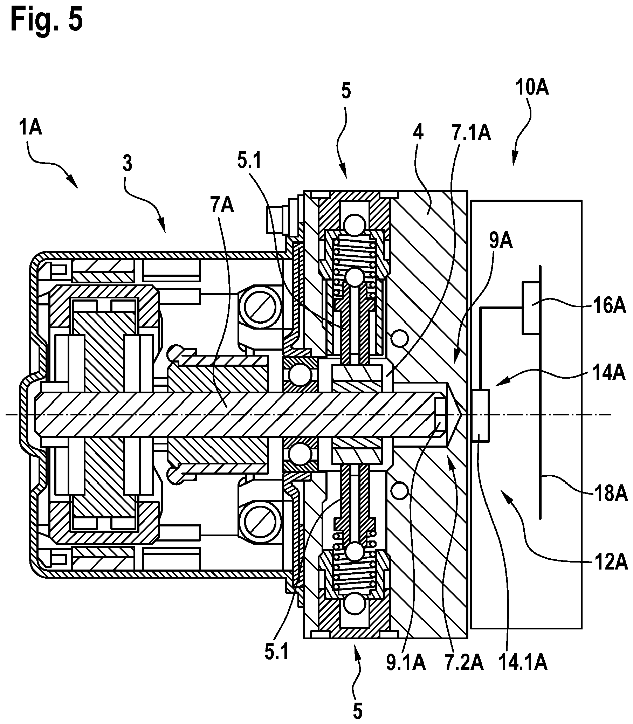

Wie aus Fig. 1 und 5 weiter ersichtlich ist, ist die Motorwelle 7, 7A das bewegte Bauteil des Elektromotors 3, welches dem Steuergerät 10 ,10A am nächsten kommt. Die Beeinflussung des Magnetfelds wird von dem magnetischen Messwertaufnehmer 14, 14A erfasst, ausgewertet und in ein Drehwinkelsignal bzw. ein Drehzahlsignal umgerechnet. In den dargestellten Ausführungsbeispielen umfasst der magnetische Messwertaufnehmer 14, 14A jeweils einen Hallsensor 14.1, 14.1A, welcher die Magnetfeldänderungen erfasst. Die Umrechnung kann beispielsweise von einer Auswerte- und Steuereinheit 16, 16A durchgeführt werden, welche innerhalb des Steuergeräts 10, 10A auf einer entsprechenden Leiterplatte 18, 18A angeordnet und elektrisch mit dem Messwertaufnehmer 14, 14A verbunden ist. Bei einem alternativen nicht dargestellten Ausführungsbeispiel kann der Hallsensor 14, 14.1 in das Gehäuse eines integrierten Schaltkreises integriert werden, welcher die Auswertung und Umrechnung durchführt.

Wie aus Fig. 1 und 5 weiter ersichtlich ist, umfasst das Motor-Pumpen-Aggregat 1, 1A in den dargestellten Ausführungsbeispielen jeweils zwei als Kolbenpumpen ausgeführte Fluidpumpen 5, welche jeweils einen axial beweglichen Pumpenkolben 5.1 aufweisen. Zum Antreiben der Pumpenkolben 5.1 ist an der Motorwelle 7, 7A ein Exzenter 7.1, 7.1A angeordnet, an welchem die Pumpenkolben 5.1 anliegen. Die beiden Fluidpumpen 5 des erfindungsgemäßen Motor-Pumpen-Aggregats 1, 1A sind in entsprechenden einander radial gegenüberliegenden Aufnahmebohrungen im Pumpengehäuse 4 angeordnet. Die beiden Pumpenkolben 5.1 werden in der Darstellung von Fig. 1 bzw. 5 durch die Drehbewegung der Motorwelle 7, 7A über den Exzenter 7.1, 7.1A mit einer Auf-Ab-Bewegung angetrieben. Zudem sind das Gehäuse des Steuergeräts 10, 10A und der Elektromotor 3 jeweils an das Pumpengehäuses 4 angeflanscht. Das Pumpengehäuse 4 liegt daher als hermetische Trennung zwischen dem Elektromotor 3 und dem Steuergerät 10, 10A. Die Messung des Drehwinkels der Motorwelle 3 erfolgt somit durch die Wandung des Pumpengehäuses 4 hindurch, das vorzugsweise als Aluminiumgehäuse ausgeführt ist.

Bei einem alternativen nicht dargestellten Ausführungsbeispiel der Erfindung sind die Fluidpumpen 5 jeweils als Zahnradpumpe ausgeführt, welche von der Motorwelle 7, 7A angetrieben werden.

Wie aus Fig. 1 bis 4 weiter ersichtlich ist, weist der magnetische Messwertaufnehmer 14 im Ausführungsbeispiel des erfindungsgemäßen Motor-Pumpen-Aggregats 1 für ein Bremssystem einen Permanentmagneten 14.2 auf, welcher das von dem magnetischen Messwertaufnehmer 14 erfasste Magnetfeld erzeugt. Wie aus Fig. 1 weiter ersichtlich ist, ist der Hallsensor 14.1 des Messwertaufnehmers 14 zwischen dem Permanentmagneten 14 und dem Messwertgeber 9 am freien Ende 7.2 der Motorwelle 7 angeordnet. Der Messwertgeber 9 ist als geometrische Form 9.1 ausgeführt, welche das Magnetfeld des Permanentmagneten 14.2 beeinflusst. Die Magnetisierungsachse des Permanentmagneten 14.2 verläuft in vorteilhafter Weise parallel zur Achse der Motorwelle 7.

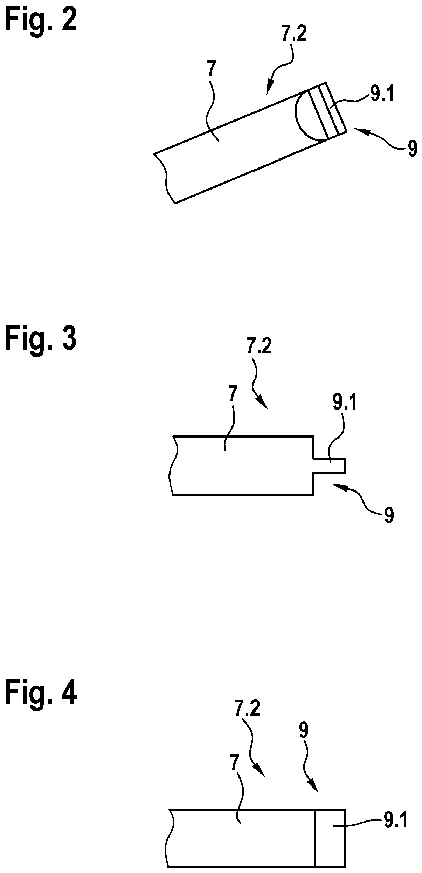

Wie aus Fig. 2 bis 4 weiter ersichtlich ist, ist die geometrische Form 9.1 des Messwertgebers 9 im dargestellten Ausführungsbeispiel als Klinge ausgeführt, welche am freien Ende der Motorwelle 7 senkrecht zur Achse der Motorwelle 7 verläuft. Hierbei zeigt Fig. 3 eine erste Stellung der Motorwelle 7, welche einen Drehwinkel von 0° repräsentiert. Fig. 4 zeigt eine zweite Stellung der Motorwelle 7, welche einen Drehwinkel von 90° repräsentiert. Bei einem erfindungsgemäßen nicht dargestellten Ausführungsbeispiel ist die geometrische Form 9.1 als exzentrisch am freien Ende der Motorwelle 7 angeordneter Zapfen ausgeführt.

Wie aus Fig. 5 weiter ersichtlich ist, ist der Messwertgeber 9A im dargestellten Ausführungsbeispiel des Motor-Pumpen-Aggregats 1A als Permanentmagnet 9.1A ausgeführt, welcher das von dem magnetischen Messwertaufnehmer 14A erfasste Magnetfeld erzeugt. Hierbei liegt die Magnetisierungsachse des Permanentmagneten 9.1A senkrecht zur Achse der Motorwelle 7A. Der Hallsensor 14.1A des Messwertaufnehmers 14A erkennt die Drehstellung der Motorwelle 7A anhand der Ausrichtung des korrespondierenden vom Permanentmagneten 9.1A erzeugten Magnetfelds. Der Permanentmagnet 9.1A wird bei der Motorherstellung an der Motorwelle 7A angebracht und erst kurz vor der Montage des Elektromotors 3 magnetisiert. Dadurch kann in vorteilhafter Weise verhindert werden, dass sich auf dem Transportweg Späne am Magneten 9.1A sammeln.

Ausführungsformen der vorliegenden Erfindung stellen ein Motor-Pumpen-Aggregat für ein Bremssystem zur Verfügung, bei welchem die Drehwinkelinformationen des korrespondierenden Elektromotors in vorteilhafter Weise ohne zusätzliche elektrische Verbindung zum Elektromotor erfasst werden. Die Übertragung der Winkelinformation erfolgt dabei nur durch die von der Motorwellenposition abhängige Veränderung von Magnetfeldlinien. Die magnetische Veränderung wird vorzugsweise über Hallsensoren am freien Ende der Motorwelle erfasst.

## Patentansprüche

1. Motor-Pumpen-Aggregat (1) für ein Bremssystem mit einem Elektromotor (3), welcher eine Motorwelle (7) aufweist, welche mindestens eine Fluidpumpe (5) antreibt, welche in einem Pumpengehäuse (4) angeordnet ist, wobei ein Steuergerät (10, 10A) am Pumpengehäuse (4) angeordnet ist und eine aktuelle Drehzahl und/oder ein aktuelles Drehmoment des Elektromotors (3) einstellt, wobei das Steuergerät (10) über eine Sensoranordnung (12), welche einen Messwertgeber (9) und einen magnetischen Messwertaufnehmer (14) umfasst, einen aktuellen Drehwinkel der Motorwelle (7) berührungslos erfasst und zur Ansteuerung des Elektromotors (3) auswertet, wobei der Messwertgeber (9) an einem freien Ende (7.2) der Motorwelle (7) innerhalb des Pumpengehäuses (4) angeordnet ist und in Abhängigkeit von der Drehbewegung der Motorwelle (7) mindestens eine magnetische Größe eines von dem magnetischen Messwertaufnehmer (14) erfassten Magnetfelds beeinflusst, welcher ortsfest im Steuergerät (10) angeordnet ist, **dadurch gekennzeichnet, dass** der magnetische Messwertaufnehmer (14) einen Permanentmagneten (14.2) aufweist, welcher das von dem magnetischen Messwertaufnehmer (14) erfasste Magnetfeld erzeugt, wobei der Messwertgeber (9) als geometrische Form (9.1) ausgeführt, welche das Magnetfeld des Permanentmagneten (14.2) beeinflusst, wobei die geometrische Form (9.1) als exzentrisch am freien Ende der Motorwelle (7) angeordneter Zapfen ausgeführt ist, welcher im Messwertaufnehmer (14) ein Sinussignal erzeugt, dessen Grundfrequenz der Drehzahl der Motorwelle (7) entspricht.

2. Motor-Pumpen-Aggregat nach Anspruch 1, **dadurch gekennzeichnet, dass** die Magnetisierungsachse des Permanentmagneten (14.2) parallel zur Achse der Motorwelle (7) liegt.

3. Motor-Pumpen-Aggregat nach Anspruch 1 oder 2, **dadurch gekennzeichnet, dass** der magnetische Messwertaufnehmer (14) einen Hallsensor umfasst.

4. Motor-Pumpen-Aggregat nach einem der Ansprüche 1 bis 3, **dadurch gekennzeichnet, dass** ein Gehäuse des Steuergeräts (10) an das Pumpengehäuses (4) angeflanscht ist.

## Claims

1. Motor/pump assembly (1) for a brake system having an electric motor (3), which has a motor shaft (7) that drives at least one fluid pump (5), which is arranged in a pump housing (4), wherein a control unit (10, 10A) is arranged on the pump housing (4) and sets a current rotational speed and/or a current torque of the electric motor (3), wherein the control unit (10) contactlessly detects a current rotational angle of the motor shaft (7) by means of a sensor arrangement (12), which comprises a measured value transmitter (9) and a magnetic measured value pickup (14), and evaluates it for control of the electric motor (3), wherein the measured value transmitter (9) is arranged within the pump housing (4) at a free end (7.2) of the motor shaft (7) and, in accordance with the rotary motion of the motor shaft (7), influences at least one magnetic variable of a magnetic field detected by the magnetic measured value pickup (14), which is arranged in a stationary manner in the control unit (10), **characterized in that** the magnetic measured value pickup (14) has a permanent magnet (14.2), which produces the magnetic field detected by the magnetic measured value pickup (14), wherein the measured value transmitter (9) is embodied as a geometrical shape (9.1) which influences the magnetic field of the permanent magnet (14.2), wherein the geometrical shape (9.1) is embodied as a pin arranged eccentrically at the free end of the motor shaft (7), which pin produces in the measured value pickup (14) a sine signal, the fundamental frequency of which corresponds to the rotational speed of the motor shaft (7).

2. Motor/pump assembly according to Claim 1, **characterized in that** the magnetization axis of the permanent magnet (14.2) is parallel to the axis of the motor shaft (7).

3. Motor/pump assembly according to Claim 1 or 2, **characterized in that** the magnetic measured value pickup (14) comprises a Hall effect sensor.

4. Motor/pump assembly according to one of Claims 1 to 3, **characterized in that** a housing of the control unit (10) is flanged to the pump housing (4) .

## Revendications

1. Groupe motopompe (1) pour un système de freinage avec un moteur électrique (3), qui présente un arbre de moteur (7), qui entraîne au moins une pompe à fluide (5) qui est disposée dans un carter de pompe (4), dans lequel un appareil de commande (10, 10A) est disposé sur le carter de pompe (4) et règle un nombre de tours actuel et/ou un couple actuel du moteur électrique (3), dans lequel l'appareil de commande (10) détecte sans contact un angle de rotation actuel de l'arbre de moteur (7) au moyen d'un agencement de capteur (12), qui comprend un émetteur de valeurs de mesure (9) et un enregistreur magnétique de valeurs de mesure (14), et l'utilise pour la commande du moteur électrique (3), dans lequel l'émetteur de valeurs de mesure (9) est agencé sur une extrémité libre (7.2) de l'arbre de moteur (7) à l'intérieur du carter de pompe (4) et influence en fonction du mouvement de rotation de l'arbre de moteur (7) au moins une grandeur magnétique d'un champ magnétique détecté par l'enregistreur magnétique de valeurs de mesure (14), qui est disposé de façon fixe sur l'appareil de commande (10), **caractérisé en ce que** l'enregistreur magnétique de valeurs de mesure (14) présente un aimant permanent (14.2), qui produit le champ magnétique détecté par l'enregistreur magnétique de valeurs de mesure (14), dans lequel l'émetteur de valeurs de mesure (9) est réalisé avec une forme géométrique (9.1), qui influence le champ magnétique de l'aimant permanent (14.2), dans lequel la forme géométrique (9.1) est réalisée par un tourillon agencé de façon excentrique sur l'extrémité libre de l'arbre de moteur (7), qui produit dans l'enregistreur de valeurs de mesure (14) un signal sinusoïdal, dont la fréquence de base correspond au nombre de tours de l'arbre de moteur (7).

2. Groupe motopompe selon la revendication 1, **caractérisé en ce que** l'axe de magnétisation de l'aimant permanent (14.2) est parallèle à l'axe de l'arbre de moteur (7).

3. Groupe motopompe selon une revendication 1 ou 2, **caractérisé en ce que** l'enregistreur magnétique de valeurs de mesure (14) comprend un capteur de Hall.

4. Groupe motopompe selon l'une quelconque des revendications 1 à 3, **caractérisé en ce qu'**un boîtier de l'appareil de commande (10) est bridé sur le carter de pompe (4).
